(19) Europäisches Patentamt
European Patent Office
Office européen des brevets

(11) Veröffentlichungsnummer: **0 413 920 A1**

# (12) EUROPÄISCHE PATENTANMELDUNG

(21) Anmeldenummer: **90111820.8**

(51) Int. Cl.5: **B21D 39/00**

(22) Anmeldetag: **22.06.90**

(30) Priorität: **24.08.89 DE 3927896**

(43) Veröffentlichungstag der Anmeldung:
**27.02.91 Patentblatt 91/09**

(84) Benannte Vertragsstaaten:
**BE DE ES FR GB IT NL SE**

(71) Anmelder: **Balcke-Dürr AG**
**Homberger Strasse 2 Postfach 1240**
**D-4030 Ratingen 1(DE)**

(72) Erfinder: **Kreher, Peter Jürgen, Dr.-Ing.**
**Brucker Holt 18**
**D-4300 Essen-Bredeney(DE)**
Erfinder: **Podhorsky, Miroslan, Dr.**
**Elisabethstrasse 10a**
**D-4030 Ratingen 1(DE)**

(74) Vertreter: **Patentanwälte Dipl.-Ing. Alex Stenger Dipl.-Ing. Wolfram Watzke Dipl.-Ing. Heinz J. Ring**
**Kaiser-Friedrich-Ring 70**
**D-4000 Düsseldorf 11(DE)**

## (54) Vorrichtung zum lagegenauen Befestigen von mehreren Teilen auf einem Hohlkörper.

(57) Die Erfindung betrifft eine Vorrichtung zum lagegenauen Befestigen von mehreren, jeweils mit einer Öffnung versehenen Teilen (2,3) auf einem Hohlkörper (1), wobei im Ausgangszustand die Öffnung in den zu befestigenden Teilen (2,3) größer als die entsprechende Abmessung des Hohlkörpers (1) an den jeweiligen Befestigungsstellen ist. Bevor der Befestigungsvorgang durch hydraulisches Aufweiten des Hohlkörpers (1) erfolgt, werden die zu befestigenden Teile (2,3) in die vorgegebene Position auf dem Hohlkörper (1) gebracht, indem sie in Aussparungen einer mindestens zweigeteilten Form (4) eingelegt werden. Die Druckflüssigkeit wird durch ein an die Form (4) ansetzbares Mundstück (9) in den Hohlkörper (1) eingebracht. Um Abdichtungsprobleme und Verschmutzungen der Werkstücke zu vermeiden, ist das an das eine Ende des Hohlkörpers (1) ansetzbare Mundstück (9) mit einem das Druckmedium aufnehmenden, elastisch aufweitbaren Behälter (12) versehen, der in den aufzuweitenden Hohlkörper (1) einführbar und an seiner freien Stirnseite an einem Auflager (13) abgestützt ist, das im Bereich des anderen Endes des Hohlkörpers (1) in der Form (4) angeordnet ist.

Fig.1
7
8
9
6
15
14
10
10a
5a
11
12
3
2
4
5
1
13

EP 0 413 920 A1

# VORRICHTUNG ZUM LAGEGENAUEN BEFESTIGEN VON MEHREREN TEILEN AUF EINEM HOHLKÖRPER

Die Erfindung betrifft eine Vorrichtung zum lagegenauen Befestigen von mehreren, jeweils mit einer Öffnung versehenen Teilen auf einem Hohlkörper, insbesondere von Nocken und/oder Lagerhülsen auf einer hohlen Welle, wobei im Ausgangszustand die Öffnung in den zu befestigenden Teilen größer als die entsprechende Abmessung des Hohlkörpers an den jeweiligen Befestigungsstellen ist und die Teile in die vorgegebene Position auf dem Hohlkörper gebracht werden, bevor der Befestigungsvorgang durch hydraulisches Aufweiten des Hohlkörpers mindestens im Bereich der Befestigungsstellen erfolgt, wozu die zu befestigenden Teile in Aussparungen einer mindestens zweigeteilten Form eingelegt werden, der Hohlkörper in die Öffnungen der Teile eingelegt wird und die Teile der Form durch ein sie umgebendes Gehäuse zueinander ausgerichtet und gehalten werden, bevor die Druckflüssigkeit durch ein an die Form ansetzbares Mundstück in den Hohlkörper eingebracht wird.

Eine Vorrichtung der voranstehend beschriebenen Art zum lagegenauen Befestigen von mehreren Teilen auf einem Hohlkörper ist aus der DE-PS 38 07 817 bekannt. Bei dieser bekannten Konstruktion erfolgt die Abdichtung zwischen Mundstück und Form bzw. Hohlkörper entweder durch elastische Dichtungsringe oder durch eine konische, metallische Auflage mit einer konstant gehaltenen Flächenpressung. Diese Abdichtungen sind jedoch im Hinblick auf die sehr hohen Drücke, die zur Aufweitung des Hohlkörpers benötigt werden, verschleißanfällig und damit problematisch.

Der Erfindung liegt die Aufgabe zugrunde, eine Vorrichtung der aus der DE-PS 38 07 817 bekannten Art derart weiterzubilden, daß Abdichtungsprobleme vermieden werden.

Die Lösung dieser Aufgabenstellung durch die Erfindung ist dadurch gekennzeichnet, daß das an das eine Ende des Hohlkörpers ansetzbare Mundstück mit einem die Druckflüssigkeit aufnehmenden, elastisch aufweitbaren Behälter versehen ist, der in den aufzuweitenden Hohlkörper einführbar und an seiner freien Stirnseite an einem Auflager abgestützt ist, das im Bereich des anderen Endes des Hohlkörpers in der Form angeordnet ist.

Mit diesem erfindungsgemäßen Vorschlag werden nicht nur verschleißanfällige Abdichtelemente bzw. Dichtungsflächen vermieden, es ergibt sich darüber hinaus der Vorteil, daß auch nach Beendigen des Aufweitvorganges keine Druckflüssigkeit aus dem Mundstück austreten kann. Bisher ging die im Inneren des Hohlkörpers befindliche Druckflüssigkeit nach jedem Aufweitvorgang verloren und sorgte darüber hinaus für eine Verschmutzung des Werkstückes und der Umgebung. Die erfindungsgemäße Weiterbildung vermeidet demzufolge nicht nur Abdichtprobleme, sondern schafft trotz der Verwendung von unter hohem Druck stehender Flüssigkeit für den Aufweitvorgang ein trockenes Aufweitverfahren. Während des Aufweitvorganges wird das stirnseitige Ende des druckdicht am Mundstück befestigten Behälters zuverlässig im Auflager abgestützt, so daß Überdehnungen des Behälters im Stirnbereich ausgeschlossen werden.

Bei einer bevorzugten Weiterbildung der Erfindung ist das Auflager zusammen mit den Teilen der Form in einem Gehäuse gehalten, das nach dem Ansetzen des Mundstückes mit diesem formschlüssig verbunden wird. Diese Verbindung kann entweder durch eine U-förmige Klammer oder durch mindestens einen verschwenkbar am Mundstück bzw. Gehäuse gelagerten Haken erfolgen.

Bei einer weiteren Ausführungsmöglichkeit der Erfindung kann das Auflager formschlüssig mit der Form verbunden werden. In diesem Fall wird das Auflager erfindungsgemäß mit seitlichen Ansätzen versehen, die formschlüssig mit der Form verbindbar sind. Bei einer bevorzugten Ausführungsform sind die seitlichen Ansätze des Auflagers mit einem im Querschnitt schwalbenschwanzartigen Profil ausgebildet, auf das die beiden axial geteilten Hälften der Form mittels entsprechender, schwalbenschwanzförmiger Nuten aufschiebbar sind.

Um auch das Mundstück trotz der hohen, beim Aufweitvorgang auftretenden Axialkraft zuverlässig an der Form zu halten, kann dieses gemäß einem weiteren Merkmal der Erfindung mit seitlichen Ansätzen versehen sein, die einen schwalbenschwanzförmigen Querschnitt aufweisen und auf die die beiden axial geteilten Hälften der Form mittels entsprechender Nuten aufschiebbar sind.

Mit der Erfindung wird schließlich vorgeschlagen, den elastisch aufweitbaren Behälter mittels eines an der Stirnfläche des Mundstückes anschraubbaren Halteringes am Mundstück flüssigkeits- und druckdicht zu befestigen. Der Behälter wird vorzugsweise aus einem Elastomer hergestellt.

Auf der Zeichnung sind zwei Ausführungsbeispiele der erfindungsgemäßen Vorrichtung dargestellt, und zwar zeigen:

Fig. 1 einen Längsschnitt durch eine erste Ausführungsform,

Fig. 2 einen der Fig.1 entsprechenden Längsschnitt durch eine zweite Ausführungsform,

Fig. 3 einen Querschnitt gemäß der Schnittlinie III - III in Fig. 2,

Fig. 4 einen Teilschnitt gemäß der Schnittlinie IV - IV in Fig. 3 und

Fig. 5 einen Teilschnitt gemäß der Schnittlinie V - V in Fig.2.

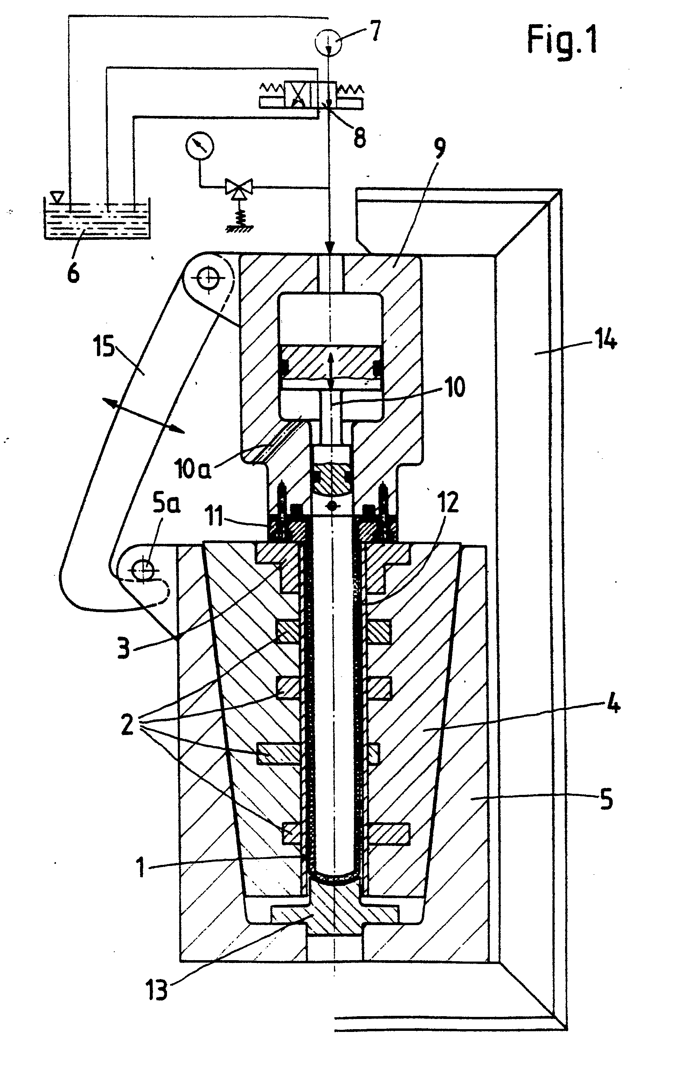

Das Ausführungsbeispiel nach Fig.1 zeigt eine Vorrichtung zur Herstellung einer Nockenwelle, die im Ausgangszustand aus einem als Hohlwelle ausgeführten Hohlkörper 1, vier Nocken 2 und einem Stirnrad 3 zusammengesetzt wird. Die vier Nocken 2 und das Stirnrad 3 werden in entsprechende Aussparungen einer Form 4 eingelegt, die zu diesem Zweck beim Ausführungsbeispiel axial in zwei Hälften geteilt ist. Nach dem Einlegen der Nocken 2 und des Stirnrades 3 in die Form 4 und nach dem Einführen des Hohlkörpers 1 in die in den zu befestigenden Teilen 2 und 3 vorhandenen Öffnungen werden die beiden Hälften der Form 4 durch ein Gehäuse 5 zusammengehalten, das mit einer konischen Innenfläche ausgebildet ist und auf die entsprechend ausgeführte konische Außenfläche der Form 4 aufgeschoben wird.

Um die Nocken 2 und das Stirnrad 3 auf dem Hohlkörper 1 zu befestigen, wird der Hohlkörper 1 im Bereich der Befestigungsstellen zwischen Hohlkörper 1 und Nocken 2 bzw. Stirnrad 3 hydraulisch aufgeweitet. Die zwischen den Nocken 2 und dem Stirnrad 3 verlaufenden Mantelabschnitte des Hohlkörpers 1 werden durch entsprechende Teile der Form 4 gegen Aufweiten geschützt.

Das Aufweiten erfolgt mit Hilfe einer Flüssigkeit, die aus einem Behälter 6 entnommen und durch eine Pumpe 7 über einen Steuerschieber 8 mit erhöhtem Druck einem Mundstück 9 zugeführt wird. Dieses Mundstück 9 ist beim Ausführungsbeispiel mit einem Übersetzerkolben 10 ausgestattet, um eine weitere Druckerhöhung zu erzielen.

An der Stirnfläche des Mundstückes 9 ist mit Hilfe eines Halteringes 11 ein Behälter 12 flüssigkeits- und druckdicht angeschlossen. Dieser Behälter 12 ist elastisch aufweitbar und enthält ein Druckmedium, das durch den kleineren Hochdruckkolben des Übersetzerkolbens 10 mit hohem Druck beaufschlagt wird. Um nach jedem Aufweitvorgang einen Druckabbau zu ermöglichen, ist das Mundstück 9 mit einem Entlüftungskanal 10a versehen.

Der vorzugsweise aus einem elastischen Kunststoff (Elastomer) bestehende Behälter 12 wird in den Hohlkörper 1 eingeführt, nachdem die Form 4 durch das Gehäuse 5 verschlossen worden ist. In der Arbeitsstellung gemäß Fig.1 liegt der Haltering 11 an der Form bzw. am Stirnrad 3 an; die freie Stirnseite des Behälters 12 gelangt hierbei zur Anlage an einem Auflager 13, das auf diese Weise bei der nachfolgenden Druckerhöhung den Behälter 12 abstützt. Beim Ausführungsbeispiel nach Fig.1 ist das Auflager 13 zwischen Form 4 und Gehäuse 5 angeordnet.

Vor dem Aufbringen des Druckes werden Form 4 und Gehäuse 5 sowie Mundstück 9 miteinander formschlüssig in der Arbeitsstellung gehalten. In der rechten Hälfte der Fig.1 wird hierzu eine U-förmige Klammer 14 verwendet. Die Linke Hälfte der Fig.1 zeigt eine Möglichkeit der Verklammerung durch einen Haken 15, der beim Ausführungsbeispiel verschwenkbar am Mundstück 9 gelagert ist und einen am Gehäuse 5 angeordneten Bolzen 5a hintergreift.

Wenn in der in Fig .1 dargestellten Stellung der voranstehend beschriebenen Vorrichtung Flüssigkeit aus dem Behälter 6 mit Druck auf den bezüglich seiner Kolbenfläche größeren Niederdruckkolben des Übersetzerkolbens 10 aufgebracht wird, erzeugt der bezüglich seiner Fläche kleinere Hochdruckkolben einen hohen Druck innerhalb des innerhalb des Behälters 12 befindlichen Druckmediums. Dieser hohe Druck weitet den Hohlkörper 1 im Bereich der Befestigungsstellen zwischen Hohlkörper 1 und Nocken 2 bzw. Stirnrad 3 auf, so daß diese Teile lagegenau auf dem Hohlkörper 1 befestigt werden.

Nach Lösen der Klammer 14 bzw. des Hakens 15 kann das Mundstück 9 von der Form 4 entfernt und hierbei der Behälter 12 aus dem aufgeweiteten Hohlkörper 1 herausgezogen werden. Hierbei geht kein Druckmedium verloren, da sich dieses innerhalb des gegenüber dem Mundstück 9 abgedichteten Behälters 12 befindet. Auch die aus dem Behälter 6 entnommene Flüssigkeit zur Erzeugung des Anfangsdruckes kann nicht aus dem Mundstück 9 austreten, so daß eine "trockene" Aufweitung erfolgt.

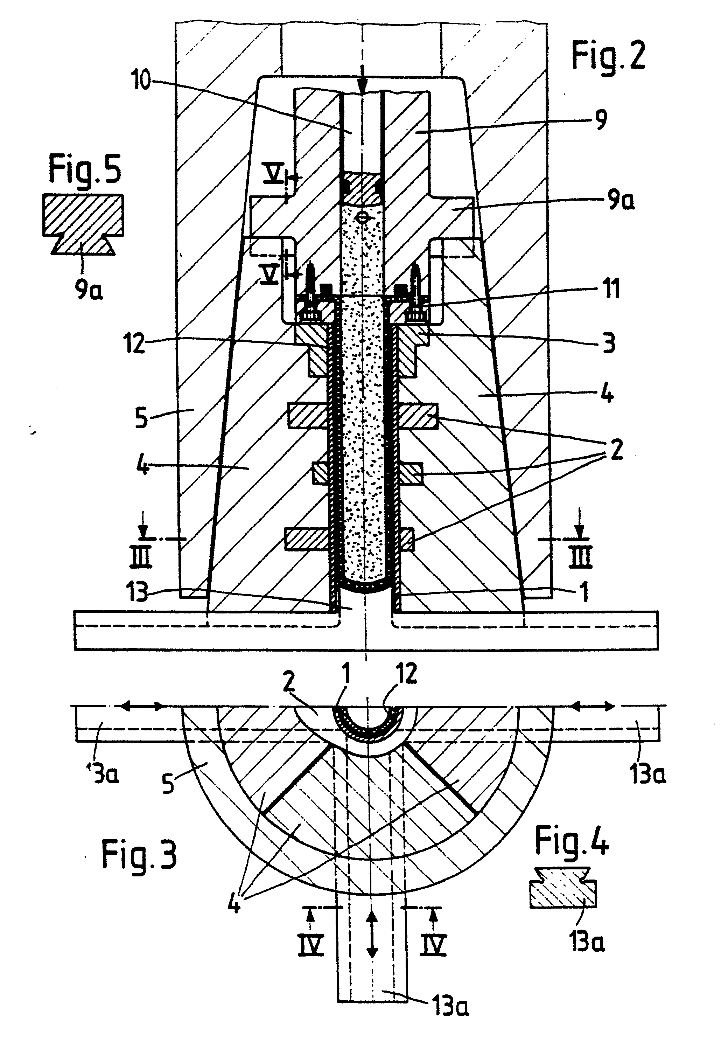

Das Ausführungsbeispiel nach den Figuren 2 bis 5 zeigt eine übereinstimmende Vorrichtung, bei der jedoch die Aufnahme der Axialkräfte in anderer Weise gelöst wurde. Der Querschnitt nach Fig.3 läßt erkennen, daß die Form 4 aus insgesamt vier Formteilen besteht, die durch das Gehäuse 5 nach Einlegen der Nocken 2 und des Stirnrades 3 zusammengehalten werden.

Das Auflager 13 für die Stirnseite des Behälters 12 ist beim zweiten Ausführungsbeispiel mit vier seitlichen Ansätzen 13a versehen, die beim Ausführungsbeispiel ein schwalbenschwanzartiges Profil gemäß Fig.4 aufweisen. Auf diese seitlichen Ansätze 13a werden die Teile der Form 4, die zu diesem Zweck mit entsprechenden schwalbenschwanzförmigen Nuten versehen sind, aufgeschoben, wie die Doppelpfeile in Fig.3 erkennen Lassen.

Sobald sich die Teile der Form 4 in der richtigen Lage befinden, wird das Gehäuse 5 übergestülpt. Die zwischen Auflager 13 und Form 4 auftretende Axialkraft wird auf diese Weise über die seitlichen Ansätze 13a aufgenommen.

Eine entsprechende Verbindung erfolgt auch zwischen Mundstück 9 und oberem Teil der mehrgeteilten Form 4. Zu diesem Zweck ist das Mundstück 9 ebenfalls mit seitlichen Ansätzen 9a versehen, die gemäß Fig.5 einen schwalbenschwanzförmigen Querschnitt haben. Auf diese seitlichen Ansätze 9a werden die entsprechenden Teile der Form 4 mit entsprechend ausgeführten Nuten aufgeschoben, wenn die Form 4 nach Einlegen der zu befestigenden Teile 2 und 3 zusammengesetzt wird. Beim Ausführungsbeispiel nach Fig.2 sind deshalb nachträglich anzubringende Klammern oder Haken entbehrlich.

**Bezugszeichenliste:**

1 Hohlkörper
2 Nocken
3 Stirnrad
4 Form
5 Gehäuse
5a Bolzen
6 Behälter
7 Pumpe
8 Steuerschieber
9 Mundstück
9a Ansatz
10 Übersetzerkolben
10a Entlüftungskanal
11 Halterung
12 Behälter
13 Auflager
13a Ansatz
14 Klammer
15 Haken

## Ansprüche

1. Vorrichtung zum lagegenauen Befestigen von mehreren, jeweils mit einer Öffnung versehenen Teilen auf einem Hohlkörper, insbesondere von Nocken und/oder Lagerhülsen auf einer hohlen Welle, wobei im Ausgangszustand die Öffnung in den zu befestigenden Teilen größer als die entsprechende Abmessung des Hohlkörpers an den jeweiligen Befestigungsstellen ist und die Teile in die vorgegebene Position auf dem Hohlkörper gebracht werden, bevor der Befestigungsvorgang durch hydraulisches Aufweiten des Hohlkörpers mindestens im Bereich der Befestigungsstellen erfolgt, wozu die zu befestigenden Teile in Aussparungen einer mindestens zweigeteilten Form eingelegt werden, der Hohlkörper in die Öffnungen der Teile eingelegt wird und die Teile der Form durch ein sie umgebendes Gehäuse zueinander ausgerichtet und gehalten werden, bevor die Druckflüssigkeit durch ein an die Form ansetzbares Mundstück in den Hohlkörper eingebracht wird,
**dadurch gekennzeichnet,**
daß das an das eine Ende des Hohlkörpers (1) ansetzbare Mundstück (9) mit einem das Druckmedium aufnehmenden, elastisch aufweitbaren Behälter (12) versehen ist, der in den aufzuweitenden Hohlkörper (1) einführbar und an seiner freien Stirnseite an einem Auflager (13) abgestützt ist, das im Bereich des anderen Endes des Hohlkörpers (1) in der Form (4) angeordnet ist.

2. Vorrichtung nach Anspruch 1, dadurch gekennzeichnet, daß das Auflager (13) zusammen mit den Teilen der Form (4) in einem Gehäuse (5) gehalten ist, das nach dem Ansetzen des Mundstückes (9) mit diesem formschlüssig verbindbar ist.

3. Vorrichtung nach Anspruch 2, dadurch gekennzeichnet, daß das Mundstück (9) mit dem Gehäuse (5) durch eine U-förmige Klammer (14) verbindbar ist.

4. Vorrichtung nach Anspruch 2, dadurch gekennzeichnet, daß das Mundstück (9) mit dem Gehäuse (5) durch mindestens einen verschwenkbar an einem dieser beiden Bauteile (9,5) gelagerten Haken (15) verbindbar ist.

5. Vorrichtung nach Anspruch 1, dadurch gekennzeichnet, daß das Auflager (13) mit der Form (4) formschlüssig verbindbar ist.

6. Vorrichtung nach Anspruch 5, dadurch gekennzeichnet, daß das Auflager (13) mit seitlichen Ansätzen (13a) versehen ist, die formschlüssig mit der Form (4) verbindbar sind.

7. Vorrichtung nach Anspruch 6, dadurch gekennzeichnet, daß die seitlichen Ansätze (13a) des Auflagers (13) mit einem im Querschnitt schwalbenschwanzartigen Profil ausgebildet sind, auf das die axial voneinander getrennten Teile der Form (4) mittels entsprechender Nuten aufschiebbar sind.

8. Vorrichtung nach mindestens einem der Ansprüche 1 bis 7, dadurch gekennzeichnet, daß das Mundstück (9) mit seitlichen Ansätzen (9a) versehen ist, die einen schwalbenschwanzförmigen Querschnitt aufweisen und auf die die axial voneinander getrennten Teile der Form (4) mittels entsprechender Nuten aufschiebbar sind.

9. Vorrichtung nach mindestens einem der Ansprüche 1 bis 8, dadurch gekennzeichnet, daß der Behälter (12) mittels eines an der Stirnfläche des Mundstückes (9) anschraubbaren Halteringes (11) am Mundstück (9) flüssigkeits- und druckdicht befestigt ist.

10. Vorrichtung nach Anspruch 9, dadurch gekennzeichnet, daß der Behälter (12) aus einem Elastomer hergestellt ist.

Fig.1
7
8
9
6
15
14
10
10a
5a
11
12
3
2
4
5
1
13

Fig.2
10
9
9a
11
3
4
12
5
4
2
III
III
13
1
Fig.5
9a
V
V
2
1
12
13a
5
13a
Fig.3
4
Fig.4
13a
IV
IV
13a

Europäisches Patentamt

# EUROPÄISCHER RECHERCHENBERICHT

Nummer der Anmeldung

EP 90111820.8

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.⁵) |
|---|---|---|---|
| Y | DE - A1 - 3 720 485 (EMITEC) * Fig. * -- | 1 | B 21 D 39/00 |
| D,Y | DE - C1 - 3 807 817 (BALCKE-DÜRR) * Fig. 1 * ---- | 1 | |

| RECHERCHIERTE SACHGEBIETE (Int. Cl.⁵) |
|---|
| B 21 D 39/00 |
| B 21 D 53/00 |

Der vorliegende Recherchenbericht wurde für alle Patentansprüche erstellt.

| Recherchenort | Abschlußdatum der Recherche | Prüfer |
|---|---|---|
| WIEN | 11-10-1990 | BENCZE |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82